(19) Europäisches Patentamt

European Patent Office

Office européen des brevets

(11) **EP 4 040 202 B1**

(12) **EUROPEAN PATENT SPECIFICATION**

(45) Date of publication and mention
of the grant of the patent:
**14.05.2025 Bulletin 2025/20**

(21) Application number: **22158300.8**

(22) Date of filing: **31.08.2011**

(51) International Patent Classification (IPC):
***G02B 6/24*** *(2006.01)*

(52) Cooperative Patent Classification (CPC):
**G02B 6/243; G01B 11/18**

(54) **REDUCING REFLECTION AT TERMINATION OF OPTICAL FIBER IN A SMALL VOLUME**

REFLEXIONSMINDERUNG AM ENDE EINER GLASFASER IN EINEM KLEINEN VOLUMEN

RÉDUCTION DE RÉFLEXION AU NIVEAU DE TERMINAISON DE FIBRE OPTIQUE DANS UN PETIT VOLUME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.09.2010 US 37911610 P**

(43) Date of publication of application:
**10.08.2022 Bulletin 2022/32**

(62) Document number(s) of the earlier application(s) in accordance with Art. 76 EPC:
**11822548.1 / 2 612 189**

(73) Proprietor: **Intuitive Surgical Operations, Inc.**
**Sunnyvale, CA 94086 (US)**

(72) Inventors:
• **WYSOCKI, Paul, F.**
**Blacksburg, VA 24060 (US)**
• **HEANEY, Alan**
**Blacksburg, VA 24060 (US)**
• **KREGER, Stephen**
**Blacksburg, VA 24060 (US)**
• **FROGGATT, Mark**
**Blacksburg, VA 24060 (US)**
• **WALKER, Kenneth**
**Semora, NC 27343 (US)**

(74) Representative: **MacDougall, Alan John Shaw et al**
**Mathys & Squire**
**The Shard**
**32 London Bridge Street**
**London SE1 9SG (GB)**

(56) References cited:
WO-A1-01/38914          DE-A1- 3 921 440
JP-A- H08 334 649       JP-B2- 3 159 861
US-A- 5 263 103         US-A- 5 809 198
US-A1- 2006 188 212

**Description**

**PRIORITY APPLICATION**

This application claims priority from U.S. provisional patent application serial number 61/379,1 16, filed on September 1, 2010.

**TECHNICAL FIELD**

The technology relates to optical fiber components, and more specifically, to the termination of optical fibers. The technology described below is particularly useful in interferometric measurements and optical fiber shape and/or position sensing applications.

**INTRODUCTION**

Optical strain sensing is a technology useful for measuring physical deformation of a waveguide caused by, for example, the change in tension, compression, or temperatuire of an optical fiber. A multi-core optical fiber is composed of several independent waveguides embedded within a single fiber. A continuous measure of strain along the length of a core can be derived by interpreting the optical response of the core using swept wavelength inteferometery. With knowledge of the relative positions of the cores along the length of the fiber, these independent strain signals may be combined to gain a measure of the strain profile applied to the multi- core optical fiber, in a technique known as optical position and/or shape sensing detailed in commonly-assigned U.S. patent application to Froggatt et al., entitled "Optical Position and/or Shape Sensing," application serial number 12/874,901, filed on September 2, 2010, this strain information can be used to reconstruct the three dimensional position of the fiber.

In many types of optical systems, including but not limited to optical strain sensing, low amplitude optical signals must be measured, either to receive communicated information or to sense small changes in the environment that change properties of the optical signal. In such systems, unintended optical power reflected at the end(s) of optical fiber(s) can create spurious signals that interfere with the detection of the intended signal. It is desirable to reduce the magnitude of these spurious reflections. The "return loss" of an optical fiber termination is the ratio of reflected light to the light incident on the termination. For optical fiber terminations, the return loss ratio of reflected to incident power is a negative sign.

$$RL'(\mathrm{dB}) = 10 \log_{10} \frac{P_\mathrm{r}}{P_\mathrm{i}}$$

A higher magnitude negative value return loss indicates a lower, more attenuated reflection.

For a standard silica single mode optical fiber, the effective index of core light is typically about 1.46. The power reflection coefficient for light incident on an index of refraction step from region of effective index $n_1$ to region of effective index $n_2$ is:

$$R = \left( \frac{n_2 - n_1}{n_2 + n_1} \right)^2$$

If a fiber core with an effective index of 1.46 is cleaved or polished to create a flat end in air of index 1, the reflection coefficient is about 3.5%, yielding a return loss of -14.5 dB. Thus, even a very small index step, or multiple small index steps give rise to substantial reflections.

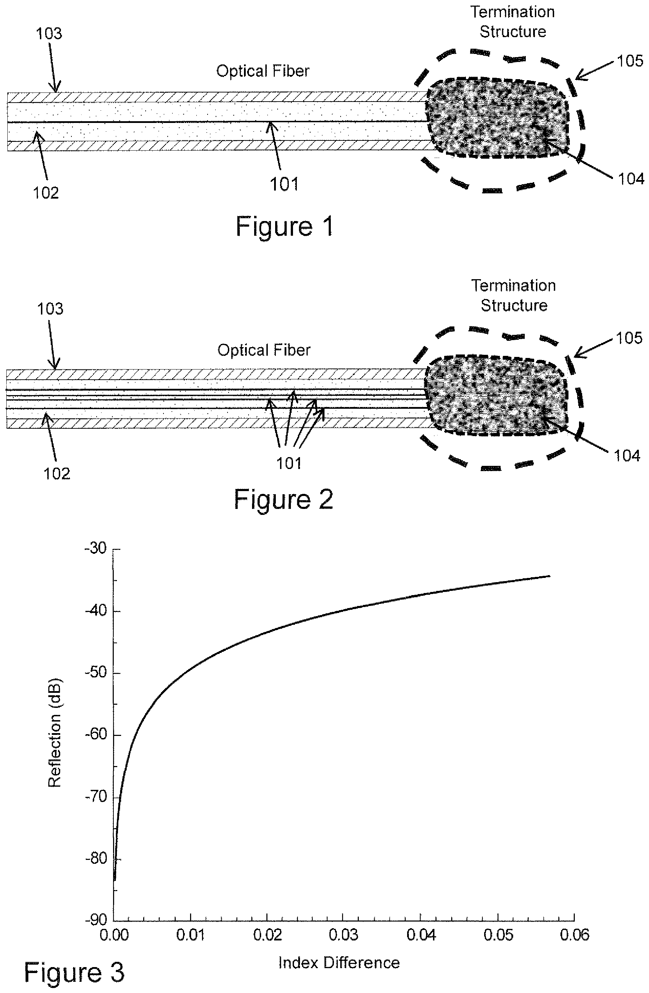

In a particular class of fiber optic systems, return loss must be minimized and the volume of the termination is limited. See the example shown Figure 1 where an optical fiber core 101 is of optical refractive index higher than a cladding region 102, which is surrounded by a coating 103. An allowed termination volume 104 is shown at the end of the fiber. When such an optical fiber is used as a sensor, it may be embedded inside a small structure and with the objective to sense as close as possible to the end of the fiber, which might be located very close to a surface 105 of a nearby structure. This close surface 105 may not be known, have a constant shape, or have a constant reflectivity. Uncontrolled light emerging from the termination will likely be close to the surface of the structure and might consequently be reflected back into the fiber core. If the surface might be ill-defined in shape or of varying reflective properties, then the light emerging from the fiber must be carefully managed so that it is not reflected but instead converted to another form of energy, usually heat, in the allowed termination volume 104. In this way, the converted light energy is not reflected back into the fiber disrupting light intended to be carried in the fiber.

As an illustrative non-limiting example, many single-mode optical fiber sensors are made with an outside fiber glass diameter of 125 um and a protective polymer coating resulting in a total fiber diameter between 140 and 250 um. The small size and flexibility of such fibers is an advantage in applications where they are embedded inside small flexible structures and can be used to sense changes to within 5 mm of the end of the fiber. Sometimes practical constraints dictate that the termination not extend radially beyond the size of the fiber coating. Otherwise, the structure that accommodates the termination, typically a channel or tube, would need to be larger than the structure that accommodates the coated fiber. It is preferable for a single structure to contain both the fiber and the termination. In an example case, the volume of the termination must fit inside a tube less than 325 um in diameter and be less than 5 mm long. That leaves a volume of no more than 0.415 mm$^3$ for a termination to adequately eliminate, attenuate, and/or contain the light so as to avoid reflection back into the fiber from external surfaces.

For a highly sensitive optical sensing application in which one or more optical frequency domain reflectometry (OFDR) products offered by Luna Innovations are used to detect and resolve scattering in an optical fiber to within 50 um, a desired return loss of an optical fiber termination might be on the order of the amount of light that would be back-reflected by the inherent scatter from 50 um of fiber. This means that less than 3 parts per billion of the original light may be permitted to be reflected back into the fiber core which translates into a return loss on the order of -85 dB-a return loss requirement among the lowest of any known application. More generally, for many fiber sensing applications with small volume termination requirements, a minimum return loss value of -70 dB can produce useful data depending on the application requirements. A return loss of -70 dB may be acceptable when the signal being measured is greater than the average scattering from a fiber, for example when distributed Bragg gratings are added to the fiber. A return loss more like -75 or -80 dB may be acceptable if the fiber used is of a type that produces greater scattering than standard optical fiber, for example, if the index of refraction is high. Improving return loss in any case improves system signal to noise ratio.

In distributed shape-sensing systems offered by Luna Innovations, sensing is performed continuously from multiple cores embedded in the same fiber. Termination of such fibers poses further challenges because, unlike single core fibers, some of the cores are not centered in the fiber structure and are closer to the edge of the fiber. A core not centered in the structure poses a different challenge for termination than a core that is centered. Additionally, it is desirable to reduce the amount of light being reflected from one core back into any other cores, i.e., low cross coupling or "cross-talk" between cores at the termination may be required. Objectives for reducing cross-talk are similar to those for low return loss. Assuming the magnitude of light traveling in all cores is nearly equal, maintaining cross-talk below -70 dB, or below -85 dB for the more stringent applications is desirable.

A fiber with multiple cores that requires a small volume termination is shown in Figure 2, which employs the same numerical labels as in Figure 1.

Several methods for terminating an optical fiber are known. For example, the end of the fiber to be terminated might be attached to a fiber without a guiding core and with index of refraction matched to the effective core mode index of the fiber, a so-called "coreless" fiber. USP 5,263,103 describes that the index of refraction of the coreless fiber must nearly match the effective index of the fiber to be terminated. Also, the length of the coreless fiber would need to exceed 3 cm in order to achieve -70 dB return loss. Even so, this approach does not ensure that the light does not escape the termination structure to be reflected by a nearby external surface.

Alternatively, it is known that the reflection at the end of an optical fiber can be reduced by cleaving or polishing the end at a significant angle relative to the axis of an optical fiber. However, the quality of the angled surface is critical to the return loss achieved. Moreover, some of the light incident on the angled surface is still transmitted through the angled surface and some is reflected at an angle. If a reflective surface is brought in near proximity to the angled end, substantial reflection back into the fiber core may occur. If the light is allowed to expand into a large volume, it can eventually be absorbed to provide a low return loss. But as mentioned above, large termination volumes are not practical or desirable in many applications.

An anti-reflection coating could be applied to the surface of the fiber either as a stack of different optical index layers or an absorbing material such as carbon-black. But the diffuse reflection from carbon-black or from layered coatings is significant. In fact, any known material that is close to the termination which has primarily diffuse reflection does not achieve the low return loss needed for these demanding applications. If a material is to be placed close to the fiber, then it either needs to be a highly-absorbing, low-scatter, volume-absorber, or it needs to have a highly specular reflection and be arranged in a geometry such that multiple specular reflections, with high absorption, occur before the light finds its way back to the fiber, either into the core from which it was emitted, or into another core of the fiber. USP 6,496,643 describes using an absorptive material in a termination but requires it to be contained in the core of a fiber with a mode effective index matched to the effective index of the fiber to be terminated. Another issue with an absorber confined to the core of a termination is that it is not readily applicable to multiple cores. Furthermore, this approach leaves light in a small core at the end of the termination structure, thus not benefiting from the expansion of the beam into larger area.

Any material attached to absorb light at a fiber termination must be index-matched, either as a bulk material in a coreless fiber or by matching a mode in a guiding structure. Figure 3 plots a theoretical reflection at a boundary as a function of index difference for a standard silica fiber directly coupled to such material. Direct attachment of any material to such a fiber would result in too high a return loss to meet the desired requirements described above unless the material index of refraction difference was less than about 0.001. The chance of finding a material in such a narrow index range which absorbs strongly enough to absorb a large portion of light within a few mm distance is very small. Many materials are highly absorbing but highly scattering or are not available in a form that is index matched to optical fiber. For example, metal particles embedded in almost any material are both highly scattering and highly absorbing for optical wavelengths. Such materials exist but produce a very high reflection when placed at the end of a fiber.

Further Patent literature

[Patent literature 1]: US 2006/188212 A1 discloses an optical terminator device suitable for terminating high energy optical signals. The device includes a heat sink cap having an internal surface. An optical absorbing layer is positioned on the internal surface of the heat sink cap. A scattering core having a fiber or waveguide connection is positioned within the heat sink cap such that a thermal barrier is maintained between the optical absorbing layer and the scattering core.

[Patent literature 2]: WO 01/38914 A1 discloses a fiber collimator, comprising at least two optical components, one of the optical components (e.g., an optical element such as a collimating lens or a plano-plano pellet) having a surface that has a comparatively larger cross-sectional area than the surface of the other optical component(s) (e.g., at least one optical fiber). The optical components are joined together by fusion-splicing, using a laser. A gradient in the index of refraction is provided in at least that portion of the surface of the optical element to which the optical fiber(s) is fusion-spliced or at the tip of the optical fiber. The gradient is either formed prior to or during the fusion-splicing. Back-reflection is minimized, pointing accuracy is improved, and power handling ability is increased.

[Patent literature 3]: JP HOS 334649 A discloses an optical terminator used to decrease the reflected return light from the end face of the optical fiber by connecting the terminator to the open end of the optical fiber having a waveguide structure. The optical terminator has at least the optical termination part to be connected to the end face of the waveguide structure part of the optical fiber. The optical termination part has nearly the same refractive index as the refractive index of the waveguide structure part of the optical fiber and includes a cylindrical ferrule which has the light absorption part of a metal doped fiber incorporated with a dopant for attenuating light, reinforces the optical fiber of the light absorption part and positions the optical fiber at the center with good accuracy. The ferrule is formed by polishing its end face to a projecting spherical surface shape.

[Patent literature 4]: US 5 809 198 A discloses a low reflection termination device comprised of a tubular glass housing having an interior cavity, an optical fiber having an end with a portion of the end being formed by the application of heat into a glass bead and extends into the glass housing with the glass bead positioned within the interior cavity, a clear cured epoxy disposed within the cavity of the housing surrounding the glass bead, and a light absorbing material which coats the tubular glass housing.

[Patent literature 5]: US 5 263 103 A discloses an apparatus which comprises a low reflection optical fiber termination. The apparatus comprises an optical fiber having a core, a cladding and a designated end. The core of the fiber has an effective refractive index N. A terminator having a refractive index approximately equal to N is attached in such a manner that the terminator and the designated fiber end are in contact. The closer the refractive index of the terminator is to the refractive index of the core of the fiber, the less back reflection occurs. A curable polymer having a high refractive index can be used to coat the terminator and a portion of the fiber.

SUMMARY

The present invention provides a device and a method of terminating an optical fiber as defined in the appended independent claims. Optional features are defined in the appended dependent claims.

An optical fiber termination provided at an end of an optical fiber including one or more cores includes a structure having a volume including an absorptive region of absorptive material provided to the end of the optical fiber that absorbs light emitted from each of the one or more cores to reduce reflections into the one or more cores to a return loss of -70 dB or less regardless of the presence of surfaces proximate the optical fiber termination. A length of the structure is less than 5 mm, and a largest transverse dimension of the structure is less than 325 um.

In a non-limiting, example embodiment, the structure has cylindrical symmetry, the volume is greater than 0.001 mm3 and less than 0.415 mm3 , a length of 3 mm or less, and a radius of 100 μm or less.

The optical fiber termination structure includes a diffusion region formed from heating the end of the optical fiber together with a proximal portion of the absorptive region abutting the end of the optical fiber. The optical fiber is associated with a first index of refraction, and the absorptive region is associated with a second index of refraction. The diffusion region gradually transitions between the first index of refraction and the second index of refraction. If there is a mismatch between the first index of refraction and the second index of refraction, the diffusion region gradually transitions between the first index of refraction and the second index of refraction to reduce reflections that occur from the mismatch.

In a first non-limiting, example embodiment, the absorptive material absorbs light emitted from the one or more cores so that any light escaping the absorptive region and reflected by an exterior surface into the one or more cores results in a return loss less than -70 dB. For example, the absorptive material is borosilicate glass, cobalt-doped blue borosilicate glass, or chromium-doped glass.

According to the claimed invention, the absorptive region includes a light-absorptive tube. According to the claimed invention, the light-absorptive tube is metal, and material of the absorptive region includes a coreless optical fiber at least partially encompassed by the light-absorptive tube. The coreless optical fiber diffuses at a proximal end with the end of the optical fiber, and the coreless optical fiber tapers at a distal end away from the end of the optical fiber. It may be desirable to fill the light-absorptive tube epoxy along with the coreless optical fiber for mechanical reasons and/or for the epoxy to absorb light.

The optical fiber may include multiple cores, and in that case, the structure reduces cross-coupling between terminations of the multiple cores to less than -70 dB. Moreover, one or more cores may be off-center in the fiber structure..

## BRIEF DESCRIPTION OF THE DRAWINGS

Figure 1 illustrates an example of the challenge of a single core fiber termination in a small volume;

Figure 2 illustrates an example of the challenge of a multiple core fiber termination in a small volume;

Figure 3 shows a theoretical reflection expected as a function of index difference at the end of a piece of silica fiber with effective index 1.448;

Figure 4 depicts light expanding from the end of a single mode single core fiber into a non-guiding region;

Figure 5 is a non-limiting example illustration of features implemented in a small volume termination for single core fiber;

Figure 6 is a non-limiting example illustration of features implemented in a small volume termination for a multi-core fiber;

Figure 7 is a non-limiting example first embodiment of a termination with a diffused region to produce a matching to highly absorbing material;

Figure 8 is a non-limiting example second embodiment of a termination with a metal tube to act as an absorber around a coreless taper;

Figure 9 is a process flow diagram showing non-limiting example steps for making a small volume fiber termination;

Figure 10 is a plot of a distribution of the reflectivity at the end of a fiber with a 2 mm long termination;

Figure 11 is a of the distribution of the reflectivity at the end of a fiber with a 2.5 mm long termination;

Figure 12 shows examples of a physical configuration of a metal tube termination process after steps 4, 6, 7, and 9 of process outlined in Figure 9;

Figure 13 graphs reflection vs. position for a metal tube termination of a 125 um fiber with a 3 cm tube for a center core; and

Figure 14 graphs reflectivity vs. position detailed for a metal tube termination of a 125 um fiber with a 3 cm tube for a core 35 um from center.

## DETAILED DESCRIPTION

The following description sets forth specific details, such as particular embodiments for purposes of explanation and not limitation. But it will be appreciated by one skilled in the art that other embodiments may be employed apart from these specific details. In some instances, detailed descriptions of well known methods and devices are omitted so as not to obscure the description with unnecessary detail.

The problems of decreasing return loss in both single-core and multi-core fiber terminations and reducing cross-coupling in multi-core terminations in a small volume that can be located in close proximity to unknown surfaces are solved by the technology described below. These problems extend beyond glass optical fibers with polymer coatings. Other forms of optical fibers may benefit from the technology described in this application.

The optical fiber termination described achieves an exceptionally low return loss termination in a small volume. A first characteristic for achieving this objective is the use of a material within an allowed, small termination volume of the optical fiber termination that is highly absorbing at the optical wavelength of interest, so that light is converted to some other form of energy, usually heat, within the termination volume. A second characteristic is that the index of refraction at the interface between the termination and the fiber end is configured to provide a gradual conversion of light to a large region without reflection in proximity to the core, where scattered light could couple back into the fiber. A third characteristic is that the absorbing material interacts with the light without substantial reflection back in the direction of the fiber while adequately reducing light emitted outside the termination volume. Different embodiments may employ all or less than all of these characteristics.

In order to achieve index or mode matching to silica-based optical fiber, silica-based glass doped with certain materials such as cobalt or chromium can have desirable absorption and scattering properties, but do not match the index of refraction of the fiber to be terminated, and often produce high levels of scattering when the dopant level is high enough to absorb many dBs of light within a few millimeters. A 10 dB/cm absorption is possible in such glasses in silica cores, but this is not high enough for many small volume termination applications. Other glass compositions that support higher levels of absorbing dopant unfortunately have substantially different indexes of refraction.

The inventors discovered that the mismatch between two materials, particularly two glass materials, can be sufficiently reduced by thermally heating the interface to a high enough temperature so that the components of the fiber to be terminated and the absorbing termination material diffuse into each other. This creates a radial diffusion of the core of the fiber to be terminated, e.g., a cone-like taper of the core, while also creating a gradient index region transitioning from the fiber index of refraction to the index of refraction of the terminating material.

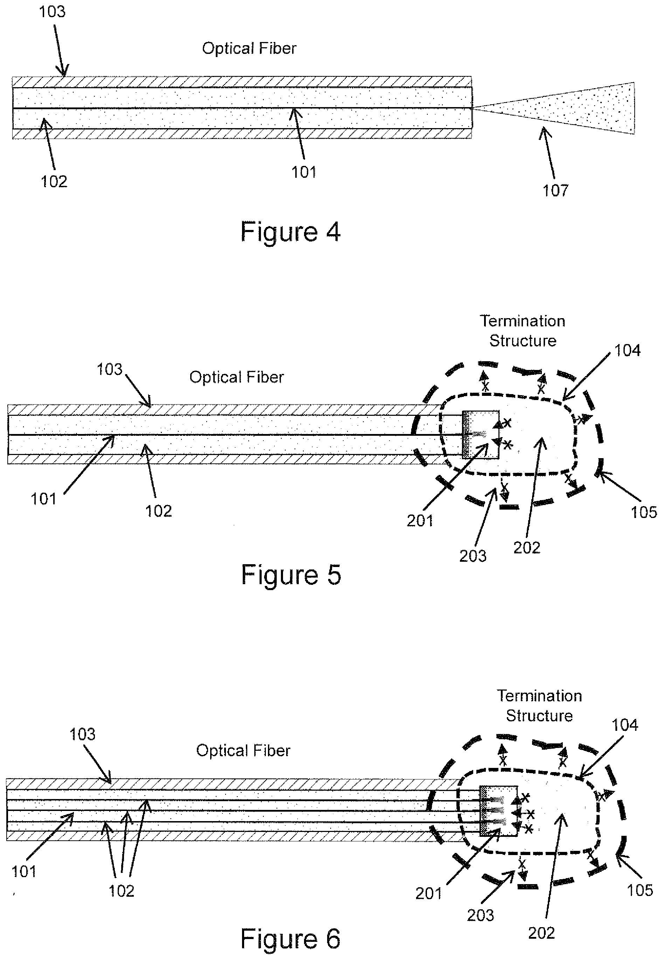

Metals in crystalline form, as opposed to doped into a glass or other material composition, are effective absorbers of optical wavelengths of light, and light does not pass through even extremely thin metal layers. However, metals are also effective reflectors. So a solid metal surface or metal particles embedded within another material, such as an epoxy, placed at the end of a fiber absorb substantial incident light but also produces very high levels of reflected light. Depending on the angle of incidence, the light can return back to the fiber core or can be multiply reflected to eventually partially return to the fiber core. If the fiber has multiple cores, the challenge of preventing light from returning to any of the cores is increased. However, when light is incident on a smooth metal surface at a grazing angle, the metal produces a high specular reflection (like a mirror) and a low diffuse reflection (does not scatter in all directions) so there is rapid absorption of light that is not reflected. Once light leaves the guiding core of an optical fiber, energy will spread in the direction transverse to the direction of propagation. This well known phenomenon is typically referred to as beam divergence. Figure 4 depicts light expanding from the end of a single mode single core fiber at 107. If a surface of metal is parallel to the direction of propagation of the light, the light can interact with the metal surface gradually as the optical beam diverges. It is not possible to achieve only grazing angle interactions if the metal is randomly distributed in an epoxy placed in the direct path of the light. So only a carefully designed physical structure that controls the interaction of the metal with the light can achieve the desired result. In one example embodiment, a metal tube is placed over the end of the fiber to mechanically protect the end of the fiber. The surface of the metal tube or other metal termination structure shape does not need to be parallel to the direction of propagation of the light. Rather, the orientation of the optical fiber in the termination may be manipulated to cause the light to interact with the metal surface over a shorter length such that the back reflection remains small while substantially all the light is absorbed by the metal within a short distance in the light propagation direction. The rate at which such a metal surface can absorb light from an expanding optical beam while keeping the reflected light to a low level dictates how a small termination volume can be achieved.

The features implemented for creating a small volume optical fiber termination capable of being placed in immediate proximity to another reflecting surface is shown in Figure 5 for a single-core fiber and in Figure 6 for a multi-core fiber. The optical fiber termination volume need not be any particular shape, e.g., cylindrical, or have a particular symmetry. Light emerging from the optical fiber passes through a diffusion/transition region 201 in which the fiber core(s) expands laterally, and the index of refraction gradually transitions from the/each core's index to the index of material in the absorption region 202 of the optical fiber termination. The absorbing material is depicted as occupying the entire allowed termination volume 104. However, the distribution of absorption is not critical as long as the magnitude is adequate, and the remaining light is controlled so that a substantial quantity does not cross the boundary from the allowed termination volume 104 to hit the next surface 105 or to reflect substantially back towards the core, as indicated by the crossed out arrows 203.

The example structures in Figures 5 and 6 include a diffusion/transition region 201 that allows light to expand from the core(s) of the fiber into the termination volume 104 that includes an absorbing region 202 to absorb the wavelength of interest and convert the light to heat or another form. The absorbing region 202 preferably contains an absorbing material. The absorbing material need not be uniformly distributed within the absorption region 202 as long as the amount of light that escapes or is reflected back to the cores is controlled. These structures prevent or at least largely prevent scattered light from propagating back into the cores or out of the termination volume 104.

The diffusion/transition region 201 may achieve different degrees of matching between dissimilar materials depending upon the amount and type of processing performed, the initial mismatch, and the requirements of the application (processing may stop when an adequate match is achieved). A greater scattering back into the core from the absorption region may be allowed in order to utilize a doped material that absorbs more light rapidly, thus making the device smaller at the expense of performance. Greater escaped light may also be allowed to make the device smaller if the characteristics of the next surface to be encountered are known or can be controlled. The crossed-out arrows in the figures do not mean that absolutely no light passes that direction, only that the light is managed to the level required by the application.

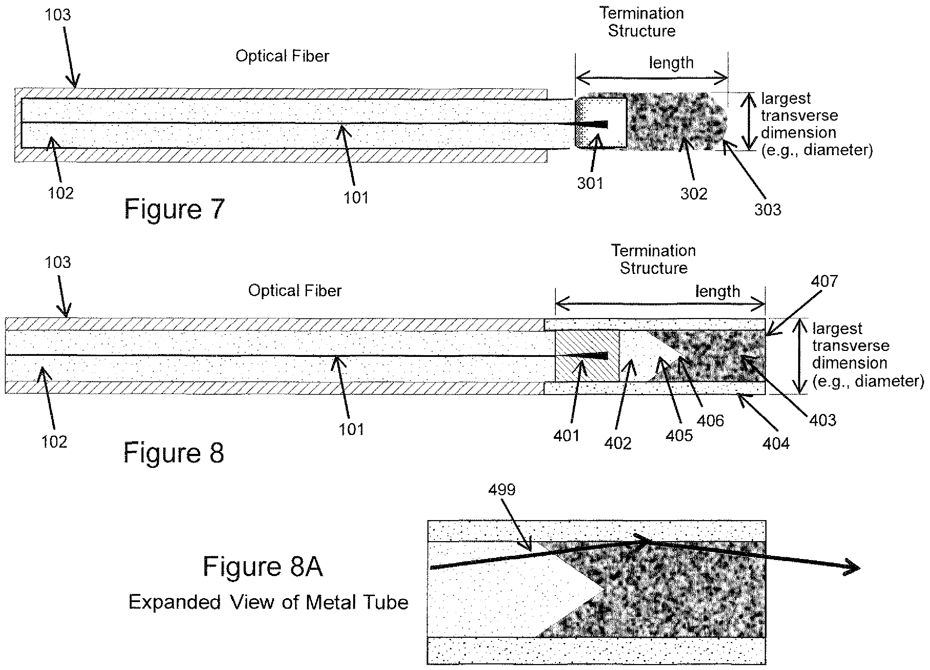

A first example, non-limiting embodiment is depicted in Figure 7 that employs all of the three characteristics mentioned above. In this embodiment, the termination structure 302 includes an absorbing material occupying at least a majority of the full termination volume and is directly attached to the end of the fiber to be terminated by heat processing at the end of the fiber interface. The absorbing material is chosen to be adequately absorbing to convert the majority of light to heat in a small volume but with minimal scattering. Additionally, careful thermal treatment in the diffusion region 301 ensures that reflections that would otherwise result from index mismatch are prevented or at least substantially prevented. Both ends of the termination structure 302 are depicted as being somewhat rounded because this is generally the natural result of using thermal processes. Processes that cause diffusion at the fiber/termination boundary typically produce a smoothing rounding effect between the materials. Many processes can be used to produce the far boundary of the structure. For the example in Figure 6, the termination is heated and pulled off, creating the rounded effect shown. However, the termination may also be cut, polished, cleaved, crushed, snapped, or broken in other ways that may produce acceptable results.

The length and diameter of the termination structure 302 are labeled under the assumption of cylindrical symmetry where the termination volume is given by $V = \pi D^2 l/4$. Figures 7 and 8 show a largest transverse dimension corresponding to the diameter of those cylindrical structures. But other shape structures are possible that lead to a different termination volume and shape. Nevertheless, every structure includes some sort of length and largest transverse dimension. Although the term diameter is used in the examples below, the technology is applicable to any termination shape regardless of whether it has a diameter dimension.

A second non-limiting example embodiment of a termination structure that achieves the three characteristics described above is shown in Figure 8. A material with index of refraction similar to the index of the core to be terminated 402 is used inside the termination volume and is tapered 405 some distance from the expanded fiber core in the diffusion/-transition region 401. To terminate a silica-based optical fiber, the termination may use an undoped silica fiber to allow the light to expand and an index-matched epoxy or other material once expanded at the end of the undoped silica fiber 406. Light absorption is produced by interaction at a grazing angle 499 shown in an expanded view at Figure 8A with a light-absorbing tube 404 suitably prepared on the inside surface of the tube to prevent significant diffuse reflection toward the fiber core 101. Preparation of the inside of the tube can include a wide variety of commonly practiced manufacturing techniques including but not limited to cleaning, deburring, and polishing and such preparation might not be a separate processing step. In some cases an as-made tube will have acceptable performance without additional processes.

If properly implemented, the diffuse reflection from the inside of the tube is a small fraction of the incident light. The tube 404 may be made of metal and may also be filled with an index-matched epoxy 403 that allows for propagation to the end of the metal tube. Some light-absorption may also be produced by selecting a matching material, possibly an epoxy, with some level of light-absorption. Other various implementations of this example embodiment that allow light to expand into a coreless material and then interact with metal or other specular reflecting material at a grazing angle are also possible. As defined here, a grazing angle has an angle of incidence between the light and the surface normally greater than 45 degrees, and more preferably greater than 75 degrees. The grazing angle needed to achieve acceptable reflections depends on the amount and direction of diffuse reflections from the tube surface.

The taper 405 may be made with coreless fiber in order to efficiently launch light from the core(s) into the termination volume without producing any scattering events close to the end of the core(s). It is beneficial if the termination media 403 is nonscattering, has an index of refraction close to but slightly above the index of refraction of the taper 405 material, and adheres the coreless material 402 to the light-absorbing tube 404. The termination material index of refraction should be close enough to the taper 405 index of refraction so that the reflection from the interface between the taper and the termination media, when coupled back into any core, is below the desired target return loss and allowed cross coupling magnitude. For example, commercially available optically transparent epoxies are suitable for the termination media. Although the termination media may be light-absorptive, this is not necessary if the termination region is bounded at least in part by a light-absorbing tube 404. The light-absorbing tube 404 geometry reduces scattering back into the core(s), because most scattered photons will propagate forward, while also providing a high degree of light-absorption. Commercially available hypodermic needle stainless steel tubing is an example of a readily available and suitable material for a light-absorbing tube 404. The light-absorbing tube 404 combined with the taper 405 and termination media 403 form a highly light attenuating, multi-mode waveguide.

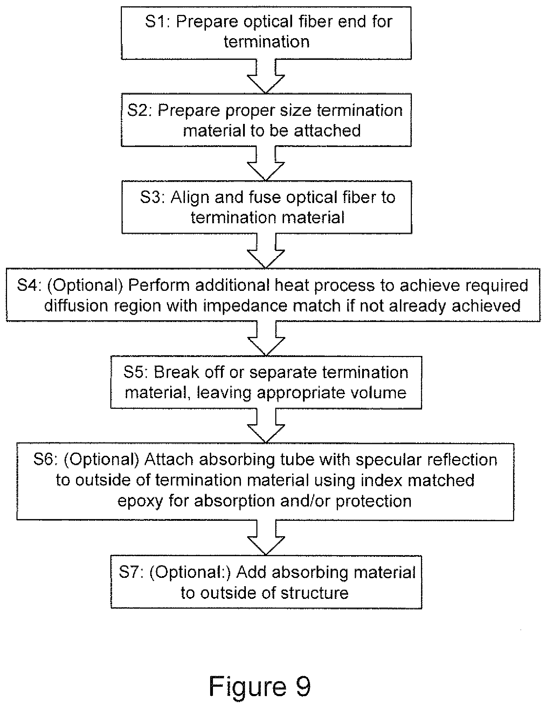

The non-limiting example fiber termination structure embodiments shown in Figures 7 and 8 and variations thereof might be made by a non-limiting, example process described by the flow diagram of Figure 9. Although the illustrated order of operations is a preferred order, other orders may be used, e.g., as new materials and processing methods become available. In some cases, it may be possible to combine several of the steps into a single processing step. For example, diffusion and material separation might occur in a single heat process.

The following is a specific procedure for terminating an optical fiber in a small space with very low back reflection at the termination to produce the non-limiting example embodiment shown in Figures 7. A person skilled in optical splicing and thermal processing techniques understands that some variations of the procedure will also produce acceptable results and that not all steps necessarily need to be performed. The procedure was carried out on a Fujikura FSM-40PM Arc Fusion Splicer with firmware version 2.0.7 controlled by Splicelab software version 2.0.7. The steps used in this procedure corresponding to the step labels in Figure 9 are now described.

Step S1: Prepare the fiber optic end for termination by removing some coating, cleaning off residue, and cleaving the end. Cleaving the end at a 15 degree angle, for example, can improve the final result, but a flat (0 degree) cleave produces acceptable results for many applications.

Step S2: Prepare proper size termination, e.g., by pulling light-absorptive glass down to a diameter on the order of the diameter of the fiber optic to be terminated.

Step S3: Place the prepared optical fiber end and a proximal end of the light-absorptive material, e.g., glass, into a fusion splicer, bring them into proximity. Position the interface between the optical fiber end and the termination's light-absorptive material such that the fiber end is exposed to a higher temperature than the absorptive material, and fuse together by heating, e.g., with a high power arc.

Step S4: Optical measurements at this point may well show that the two materials are physically connected but the reflection from the interface might be too large. Perform additional heating to achieve desired/required diffusion region with impedance match and to achieve an acceptable reflection loss (if not already achieved), e.g., with a high power arc. It may be necessary to move the fiber and the absorptive material together to prevent the interface from separating Step S5: Break off, separate, form, mold, etc. termination material to produce the desired length and/or volume for termination structure. One way to separate the termination absorptive material from the rest of the material so that an appropriate length of the absorptive material is attached to the optical fiber is to reposition the fiber in the splicer, fire an arc, and pull the two ends of the structure apart such that the glass stretches and then breaks at the point where it is heated. It may be necessary to repeat the pull-off step several times to separate the glass. It may also be necessary to reposition the structure between arcs to achieve an optimal taper. It can be beneficial to separate the termination material in such a way that the end has a prescribed geometry, e.g., a taper.

Step S6: Place a tube over the termination material attached in steps 1-4. Attach the tube to the termination material with adhesive, e.g., index matching epoxy. The tube can be added to provide benefit in absorbing light or for mechanical protection. The step of adding of a tube for the second example embodiment in Figure 8 is not required for the first example embodiment as depicted in Figure 7.

Step S7: Add a light-absorbing material to the surface of the termination structure. In the case of embodiment 1, the material might be added to the entire surface of the structure or just added to particular regions, e.g. the end only. This can be particularly useful when the termination structure is expected to be used in close proximity to a reflective surface, but it is not required if an adequate result is achieved without such material.

It is a common understanding in the fiber optic field that fusion splicing dissimilar fibers is difficult, requiring very precise splicing techniques. This understanding is based on attempts to splice dissimilar fibers with dissimilar small size optical modes, a process that requires very low distortion of the shape of the fibers at the interface, and careful diffusion matching to match the optical mode through the structure, while also trying to achieve robust mechanical attachment. In contrast, terminating a fiber using the approach described above is a different situation because it does not require a mode match, requires substantially more heat processing to diffuse the core to a greater extent, and may even benefit from some amount of distortion at the diffusion layer. The inventors discovered that, under these circumstances and contrary to what people skilled in the art assume, very dissimilar materials can be fused, diffused into each other, and mechanically attached.

The process above was performed to terminate a test silica fiber with 7 single-mode germanium cores arranged with 6 cores around 1 centered core with a core-to-core spacing of 35 um. Only 4 of the cores, 3 symmetrically arranged around the center core, were used in the example test. The test fiber had an outside glass diameter of 125 um and was terminated using different absorbing materials. The first absorbing material was Blue Vycor® 7904, with a composition of 96% $SiO_2$, 3% $B_2O_3$ and 1% being a mixture of $Na_2O$, $Al_2O_3$, $ZrO_2$, and CoO. The concentration of CoO is estimated to be less than 0.1%. The index of refraction of Blue Vycor is well-matched to the effective index of refraction of the optical fiber's guided mode. This absorbing material was successfully fused to the fiber and produced acceptable interface reflection results but required a length in excess of 1 cm to achieve acceptable return loss for the termination. Blue Vycor was measured to have an absorption of 1.4 dB per mm for light with a wavelength of 1550 nm. It was found that a cobalt-doped blue borosilicate glass with composition approximately [0-45%, Na- 3%, Al-2%, Si-35%, B-13%,Co-2%] had a significantly higher absorbance, on the order of 13 dB per mm. The index of refraction of the borosilicate glass is significantly different than the effective index experienced by the guided light in the fiber core. It was found that the reflection at the material interface could be reduced by heating the interface for a sufficient length of time to a sufficient temperature. If the heating is done with a plasma arc, the temperature is typically not known. In this case, the interface is heated until interface reflections are acceptable, as observed using an appropriate optical measurement tool. The heating process can be done as one continuous step or as a series of shorter steps with intervening measurements to produce better process control.

Ten terminations were made using the above described process with the borosilicate glass, the fibers being angle-cleaved before fusing, and all terminations being heat processed multiple times to achieve an acceptable reflection at the fiber to absorptive glass interface. All terminations, once separated, measured less than 3 mm in length beyond the initial fiber end with an outer diameter less than 190 microns with a total termination volume approximately 0.085 mm$^3$. In an example not according to the claimed invention, no metal tube was added to these terminations (Step 6 was not performed). The reflection of 4 of the cores was measured for all ten terminations. All terminations had reflections measured at less than -70 dB return loss. Terminations can be produced which have reflections less than -85dB by skilled operators and carefully following the procedures described.

To confirm the importance of the diffusion boundary region, one of the terminations with borosilicate glass was made as described above and the resultant return loss for the central core was measured as the heat fusing step was repeated several times. The return loss after each heat process is summarized:

| Number of Fusion Heat Processes | Resultant Return Loss (dB) |
| --- | --- |
| 1 | -76 |
| 2 | -83 |
| 3 | -87 |
| 4 | -89 |
| 5 | -92 |

Each successive heat process produces a smoother, more gradual diffusion boundary region and therefore a lower reflection coefficient.

The following calculation is helpful in estimating the required absorption of the material used in the termination for this approach. Assuming that light from the fiber core expands smoothly through the diffusion region with little reflection, and expands to fill the structure, it is important that the light be absorbed rapidly enough to avoid other reflections, particularly reflections from the boundary of the termination to an air interface or from any reflection beyond the structure. The main such reflection is typically from the far end of the structure and such light passes twice through the absorbing material. Assuming that this is the dominate reflection into the core, the return loss may be estimated as:

$$RL(dB) = 10\log_{10}\left(\frac{A_{core}}{A_{clad}}\right) + R_{end}(dB) - 2\alpha l$$

where $A_{core}$ is the area of the core mode of the fiber, $A_{clad}$ is the area of the fiber cladding, $R_{end}(dB)$ is the reflection coefficient of the end of the structure, $\alpha$ is the absorption per unit length in dB/mm of the absorbing material and $l$ is the length of the absorbing material in mm. This equation assumes the light expands into the area of the cladding, and so the light coupled to the core after reflecting from the far end is reduced approximately by the ratio of the areas of the core to the cladding, by the absorption produced by passing twice through the absorbing region, and by the magnitude of the direct reflection at the end. So there are three ways to reduce the measured reflection: 1) absorb the light on the round trip pass from the core to the most distal surface and back to the core, 2) reduce the amount of light reflected from the most distal surface, and 3) make sure the reflection from the most distal surface does not reflect directly back into the core. The assumption is that the light has successfully left the core without a large reflection at the core-to-material interface. If the end is a glass air reflection with -14 dB reflection and the area ratio is for a typical 125 um single mode fiber about a factor of 200 or -23 dB, then the loss of 2 passes through the termination material would need to be 33 dB to achieve a -70 dB reflection. If this is to be achieved in 2 passes through a 2 mm length in this example, then the termination material absorption is preferably at least 8.25 dB/mm.

The maximum length and largest transverse direction (e.g., outer diameter) of the termination structure are limited by the requirements to fit inside an external structure of small size and to sense within a certain length of the physical end. These limits are set at 5 mm length and 325 um by practical application. The greatest outer diameter of the termination is measured by measuring the largest transverse dimension of the termination structure. The termination structures described above for this first example embodiment are all substantially smaller than these upper limits. Increasing the size of the termination structure does not diminish the optical performance, and therefore, any larger termination may be used. On the other end of the range, the minimum length is set as described above by the absorption rate achieved by the absorbing material. In example tests, 2 mm termination lengths have been achieved. The minimum largest transverse dimension of the termination structure is limited by the requirement to couple light from all cores of interest into the termination structure and then achieve the desired return loss. For a multi-core fiber, all cores must be enclosed by the diffusion region of the termination, so this is one practical minimum. In the case of the example 7-core fiber with 35 um core spacing described here, the outer extent of the cores is 70 um. For a single core fiber, the termination must be larger than the core, which is typically only a few microns in size. Additionally, the minimum largest transverse dimension is limited by the inverse relationship between beam divergence and the magnitude of light reflected into an optical core, represented by the cladding to core area ratio described above. If the light does not diverge as much, than a higher absorption rate is required of the absorbing material and/or a lower reflection from the distal end must be achieved in order to attain the required overall return loss. The smallest volume terminations built by the inventors to date using the technology in this application is method have a 2 mm length, less than a 190 um maximum transverse dimension, and an overall volume approximately $0.0567\ mm^3$. The inventors believe the minimum achievable volume using the technology in this application may approach $0.001\ mm^3$ by using rapid absorption and smaller diameter material.

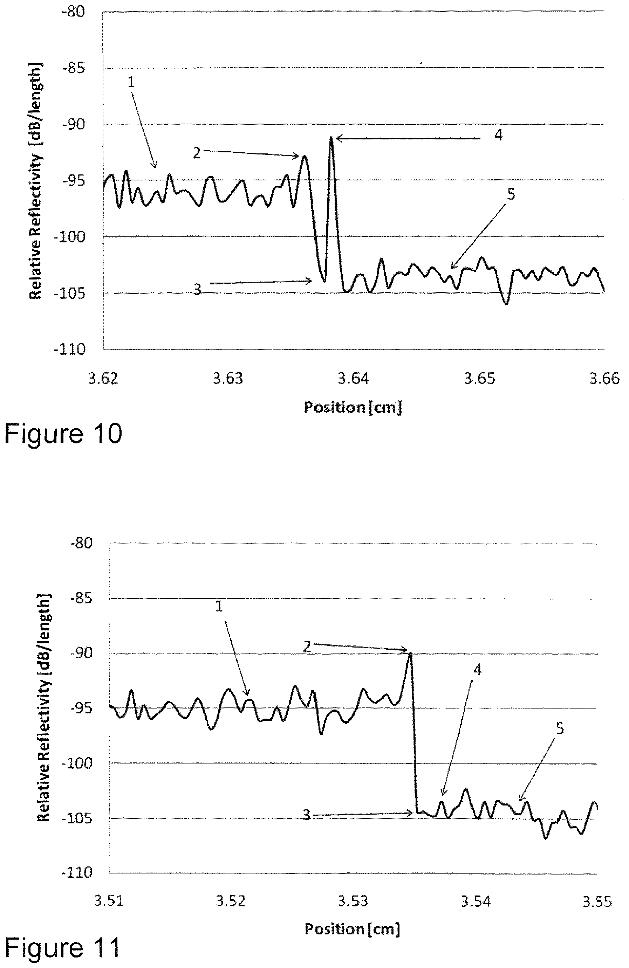

Figure 10 is a graph of the reflection as a function of position at the end of a test fiber with a 2 mm long termination. The data was measured using a Luna OBR, and the value on the Y axis represents the power reflected per spatial resolution of the system, which is 40 um in this example. An integral of this graph over the length of the termination structure, scaled for the number of points and resolution, is the return loss of the termination. In the graph, 5 indicates the noise floor of the measurement, 1 indicates the scattering that is inherent in the fiber, 2 indicates a small increase in reflection over the intrinsic scatter that occurs at the transition region, 3 indicates the very small value that is measured for reflection in the absorptive material which is indistinguishable from the noise floor of the measurement, and 4 indicates the reflection from the interface between the distal surface of the termination structure and air. The reflection loss at 4 is above the reflection loss indicated at 1, but these reflection loss values may be acceptable for most applications.

Figure 11 is a graph of the reflection at the end of a fiber with a 2.5 mm long termination. Similar label numerals are used as for Figure 10. The measurement in Figure 11 indicates that the absorption of the glass absorptive material in the termination attenuates the light enough that the end of the termination is no longer able to scatter substantial light into the core. Comparing the peak indicated by number 4 in both Figures 10 and 11 a termination measured in Figure 11 produces a reflection from the most distal surface that is indistinguishable from the measurement noise at 5, while the termination measured in Figure 10 produces a reflection from the most distal surface at 4 that is larger than the fiber scatter at 1. This shows that a termination longer than 2 mm is needed if it is required to have a reflection below fiber scatter and this particular material is used.

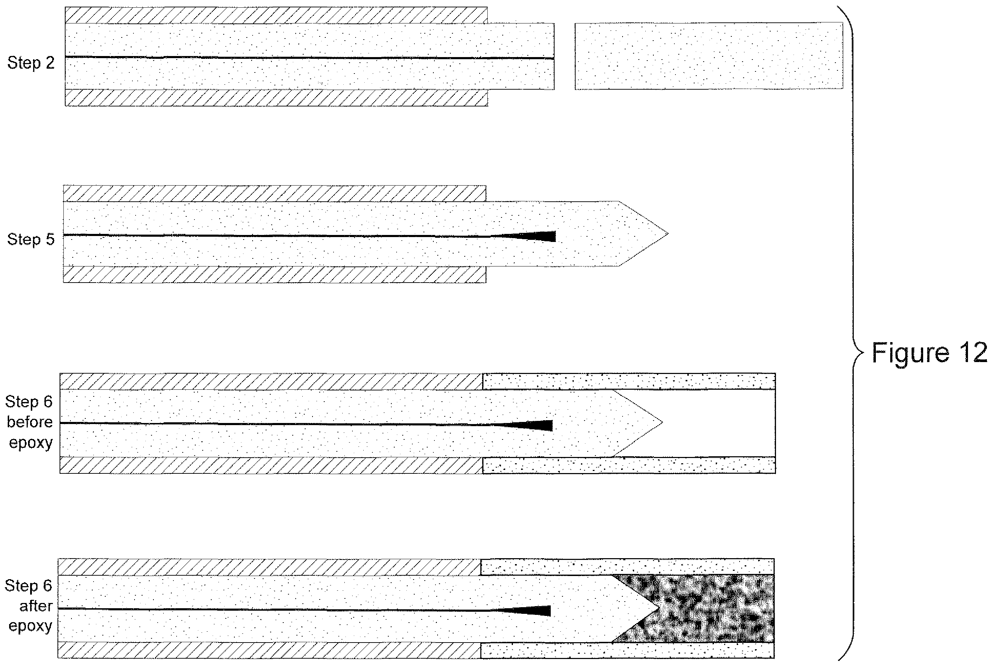

The second example embodiment may also be produced by a process as summarized by Figure 9. The following example procedure may be used for terminating an optical fiber in a small space with very low back reflection at the termination in accordance with the termination structure depicted in Figure 8. Those skilled in the art of optical splicing understand that variations of the procedure will also produce acceptable results. The procedure was carried out on a Fujikura FSM-40PM Arc Fusion Splicer with firmware version 2.0.7 controlled by Splicelab software version 2.0.7. The procedure is summarized as follows with an example result at steps 2, 5, and 6 being depicted in Figure 12.

Step S1: Prepare the fiber optic end for termination by removing some coating and cleaving the end. Cleaving the end at an angle, for example, can improve the final result, but a flat (0 degree) cleave produces acceptable results for many applications.

Step S2: Prepare proper size termination material by stripping coating and cleaning coreless fiber material.

Step S3-S5: Place the prepared optical fiber end and a proximal end of the light-absorptive material, e.g., glass, into a fusion splicer, bring them into proximity. Position the interface between the optical fiber end and the termination's material such that the termination material is exposed to a higher temperature than the fiber end, and fuse together by heating, e.g., with a high power arc. At the end of the heating arc, move the materials apart, such that the termination material excess is separated from the fiber. These 3 steps may be separated to allow control of the quality of the diffusion and separation processes independent of the fusion process (as in embodiment 1). But these were not separated in the example test implementation described.

Step S6: Remove terminated fiber from the splicer and position a clean metal tube (for the second example embodiment) over the terminated end pushed against the end of the optical fiber coating. Wick epoxy that is closely index-matched to the coreless fiber into the metal tube and thermally cure for several hours. Clean off excess cured epoxy from end of tube and from the point of attachment with fiber-optic and coating. Add more epoxy inside the metal tube if desired for mechanical reasons.

Step S7: Another optional step is to add light-absorbing material to the outside of the termination structure. In the second example embodiment, the material is advantageously added only to the most distal end because light does not escape through the metal tube.

This process was performed for an example 125 um fiber with 7 single-mode cores, each with numerical aperture 0.21 located as 6 cores around 1 central core with 35 um core to core spacing and with an acrylate coating diameter approximately 200 um. The metal tube used was a 34 gauge, ultra thin wall (34UTW) stainless steel tube 3 mm long with 128 um inside diameter and outside diameter approximately 195 um, smaller than the coating material. In this case, the tip of the terminated fiber optic was generally located about 1 mm from the tube end, allowing about 1 mm of epoxy in the tube. The Epoxy used was Epo-Tek 301 A+B 2-part epoxy. The coreless fiber used was OFS part # 552 HPWR040.

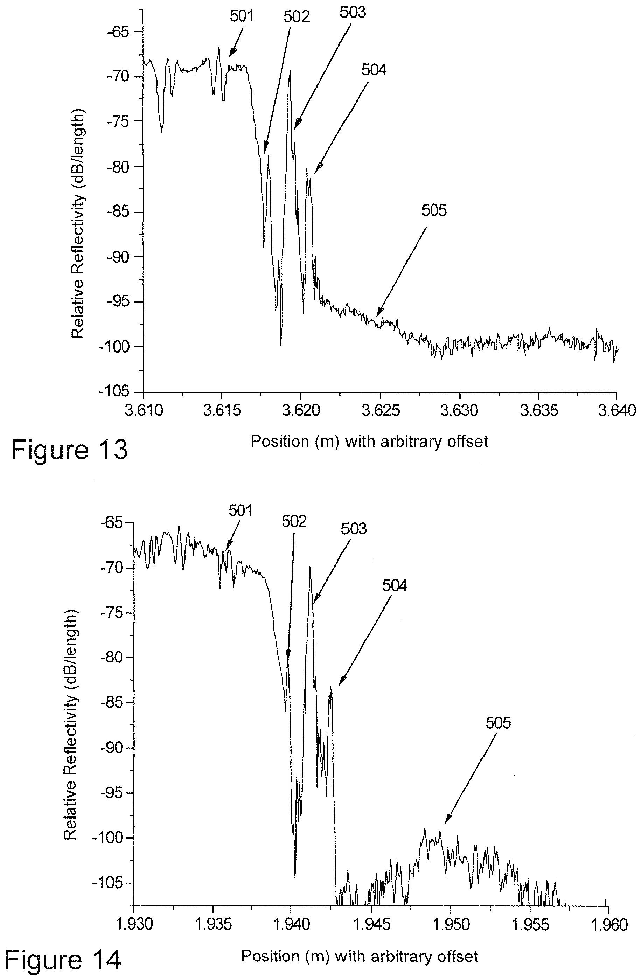

Twenty-one (21) such terminations were made, and the return loss for 3 of the outer cores and the center core were measured, as summarized in Table 1. All measured cores typically achieved less than -70 dB return loss. Using a Luna Technologies OBR the reflection of termination T076 was measured for the center core and one outer core (35 um from center) and the results are plotted in Figures 13 and 14, respectively. There are fiber gratings in this fiber that set the sensing level at 501. Reflections are observed at the diffusion region 502, the glass-epoxy interface 503, and the epoxy to air interface 504. The noise floor is 505. The relative magnitude of the 3 reflections varies with the process and differs for outer and central cores. The total integrated reflection for all 3 reflections is the value reported in Table 1 for T076. The distance from the point at which the grating reflection drops to the farthest reflection was measured at 3 mm, the length of the metal tube.

Table 1: Return Loss terminations made by metal tube approach for 4 cores:

| Termination | RL of 3 outer cores (dB) | RL of center core (dB) |
|---|---|---|
| T071 | -88.9,-83.3,-79.6 | -73.2 |
| T072 | -74.7,-80.3,-72.8 | -73.0 |
| T073 | -74.9,-77.5,-75.4 | -73.6 |
| T074 | -75.5,-85.3,-75.8 | -76.1 |
| T075 | -78.9,-79.7,-81.2 | -77.1 |
| T076 | -80.2,-78.5,-76.3 | -78.2 |
| T077 | -78.0,-78.7,-74.9 | -76.8 |
| T078 | -83.9,-81.1,-79.3 | -76.8 |
| T079 | -72,4,-75.5,-73,1 | -73.2 |
| T080 | -78.9,-79.6,-71.3 | -70.7 |
| T081 | -85.9,-82.7,-78.8 | -77.4 |
| T082 | -79.1,-82.8,-76.7 | - 78.4 |
| T083 | -74,3,-77.3,-74,1 | -74.6 |
| T084 | -76.5,-76.1,-75.3 | -71.8 |
| T085 | -72.0,-71.0,-73.6 | -70.6 |
| T086 | -86.3,-82.0,-83.1 | -77.9 |
| T087 | -80.5,-79.5,-79.8 | -76.7 |
| T088 | -80.9,-81.5,-75.0 | -74.9 |
| T089 | -69.8,-71.7,-71.1 | -71.5 |
| T090 | -75.7,-77.7,-75.3 | -74.2 |
| T092 | -75.5,-76.0,-71.9 | -73.2 |

Table 2: Crosscoupling Values for Select Metal Tube Terminations

| Sensor | Input | Output | Return loss |
|---|---|---|---|
| T076 | center | A | -79.4 |
| | | B | -83.4 |
| | | C | -82.3 |
| | A | center | -78,9 |
| | | B | -83.6 |
| | | C | -83.6 |

(continued)

| Sensor | Input | Output | Return loss |
|--------|-------|--------|-------------|
| T078 | center | A | -84.1 |
| | | B | -85.9 |
| | | C | -84.1 |
| | A | center | -85.5 |
| | | B | -86.5 |
| | | C | -87.5 |

Because these are multi-core fiber terminations, the performance with respect to cross-coupling for such fibers was also assessed. Cross-coupling for select terminations was measured using an OBR, and the results are charted in Table 2. All combinations of cores produce values less than -75 dB, indicating that these terminations effectively control the light from one core entering another core. The data includes both centered cores and 3 outer cores labeled A, B, and C located at a 35 um radius showing that light is not reflected back to different cores any more than it returns to the core from which it was launched. The reflection to different cores is generally lower by several dB when compared with the direct back reflection

The grazing angle metal tube used in the test did not achieve as much absorption as the borosilicate glass used in the test. For the test fiber, the light expands from the fiber core such that it must propagate about 0.6 mm before it reaches the metal tube boundary. While one might believe that the epoxy serves as the absorber in this structure, a search for index matched epoxy absorbing at the required rate but not scattering back into the core proved unsuccessful. The epoxy absorption in this non-limiting test case is minimal. So, unlike the approach with a volume absorber placed intimately in contact with the optical waveguide, a lower limit to how short the termination is partly determined by the size of the tube and the rate of light beam expansion produced by diffraction as shown in Figure 4 at 107. If the metal tube is larger in diameter, then it would be less effective in a shorter length. If the metal tube is substantially smaller, then it would directly reflect light into the outer cores. However, for some applications, a return loss of -70 dB is adequate, and a metal protective tube is advantageous for protecting the structure.

The same approach was used, in an example not according to the claimed invention, with a glass tube rather than a metal tube. The return loss in this case was generally less than -60 dB. But it was observed that dirt or a nearby surface outside the glass tube or at its end increased the reflection into the core and the return loss. The inventors discovered that devices made using a larger metal tube than that described above produce return loss values typically higher, between -60 and -70 dB, especially for the central core. Unexpectedly, the inventors found that making the metal tube smaller increases the light interaction with the metal, and as a result, the smaller volume device produces better return loss with the added benefit of a smaller termination volume.

As with the first example embodiment, the maximum length and maximum transverse dimension of the termination structure were set by the example, non-limiting application requirements to be 5 mm and 325 um respectively, but the termination structures actually made were much smaller, occupying only approximately 0.0895 mm$^3$. The minimum length and transverse dimension values are set depending on the return loss on metal absorption rate, beam divergence, and end reflection. As explained above, the termination structure must be big enough to contain a diffused region for the entire set of fiber cores, but in this example embodiment, the metal tube size may also be limited by practical constraints, like how small and thin wall a substantially cylindrical metal tube can be made and processed.

The metal tube placed over the end of the structure may be added by a different process or it may be formed in place. That is, metal might be deposited, sputtered, melted on, or added on the outside surfaces of the termination structure after the glass is processed. Deposited metal material still constitutes a metal absorbing tube at a grazing angle and may also conform to a taper and therefore be tapered itself while still providing a grazing angle absorber in the absorption region. The addition of a metal tube in this way means that steps S6 and S7 from the above described process would be combined.

By using a termination material closely index-matched to the optical fiber core in the test example, a single heat process with a flat cleaved fiber end formed an adequate diffusion region to produce a low reflection. The diffusion region is an important characteristic in this example embodiment. Calculations made by the inventors predicted that a direct contact between this test optical fiber (measured effective mode index 1.4782) and the termination material (index 1.448) without any diffusion would produce a return loss of -39 dB. But a Luna OBR measurement shows that the reflection at the fiber-termination interface is generally less than -80 dB using a single heat process. At this level, the reflections from the glass-to-epoxy interface and from the epoxy-to-air interface generally dominate the overall return loss.

In the second example embodiment shown in Figure 8, there might be advantage to creating the taper with an asymmetric motion where one fiber is pulled slightly to the side. This might produce a geometry that further aids in reducing the back reflection into the optical fiber.

After the fiber is separated in the first example embodiment in Figure 7, a metal tube may be added to the termination structure as in the second example embodiment in Figure 8. Thus, the two example embodiments may be merged together as well as manufactured using a single process with improved performance.

Additionally, in both example embodiments shown in Figures 7 and 8, there may be an advantage to ensuring that the most distal surface is at an angle of five degrees or more such that any specular reflection from that most distal surface does not travel directly into an optical core.

Another example embodiment coats the surface of the absorptive glass with a light absorbing coating, for example, carbon black or black rubber. Loctite 380 with Black Max® was tested as an example. With Black Max® applied directly to the end of an optical fiber, back reflections too large for the required return loss were observed. However, applying Black Max® to the outer surface of the absorptive glass that is approximately 2 mm long helps eliminate light without increasing reflections. Adding the same Black Max® material to the end of the optical fiber termination was found to reduce the residual reflection for this embodiment as well.

While light-absorptive glass is referred to in the first example embodiment, other dielectric materials may be used which have suitable light absorption properties and can achieved the desired attachment properties. Although stainless steel works well as a light-absorbing metal tube in the second example embodiment, other light-absorbing metals can be used. In addition, the index-matching epoxy may be chosen to meet the requirements of a particular application.

Although various embodiments have been shown and described in detail, the claims are not limited to any particular embodiment or example. None of the above description should be read as implying that any particular element, step, range, or function is essential such that it must be included in the claims scope. The scope of patented subject matter is defined only by the claims. All structural and functional equivalents to the elements of the above-described preferred embodiment that are known to those of ordinary skill in the art are expressly intended to be encompassed by the present claims. Moreover, it is not necessary for a device or method to address each and every problem sought to be solved by the technology described, for it to be encompassed by the present claims.

**Claims**

1. A device comprising:

   an optical fiber having one or more cores (101);
   a coreless fiber (402) fused to the optical fiber at a distal end of the optical fiber, the coreless fiber (402) forming a taper (405) at a distal end of the coreless fiber (402); and
   a light-absorbing metal tube (404) surrounding a distal portion of the optical fiber, adhered to and surrounding the coreless fiber (402), and extending distally beyond the taper (405),
   wherein the light-absorbing metal tube (404) produces high specular and low diffuse reflection when light is incident on the light-absorbing tube at a grazing angle of incidence;
   wherein a diffusion region (201, 401) is formed by heating the distal portion of the optical fiber together with a proximal portion of the coreless fiber (402),
   wherein the one or more cores (101) expanding laterally within the diffusion region (201, 401) to cause light from the optical fiber to expand in the coreless fiber (402) and to interact with the light-absorbing metal tube (404) at a grazing angle of incidence greater than 45 degrees,
   wherein the distal portion of the optical fiber, the coreless fiber (402), and the light-absorbing metal tube (404) collectively form a termination structure that terminates the optical fiber, and
   wherein the termination structure has a length less than 5 mm, has a largest transverse dimension less than 325 um, and achieves a return loss of -70dB or less regardless of a presence of surfaces (105) proximate the termination structure.

2. The device of claim 1, wherein the optical fiber comprises a silica-based optical fiber, and wherein the coreless fiber (402) comprises an undoped silica fiber.

3. The device of claim 1, further comprising termination media (403) between the light-absorbing metal tube (404) and the taper (405).

4. The device of claim 3, wherein the termination media (403) has an index of refraction close to and above an index of refraction of the taper (405).

5. The device of claim 3 or 4, wherein the termination media (403) adheres the coreless fiber (402) to the light-absorbing metal tube (404).

6. The device of any of claims 3 to 5, wherein the termination media (403) is nonscattering.

7. The device of any of claims 3 to 6, wherein the termination media (403) is light-absorbing.

8. A method of terminating an optical fiber having one or more cores (101), the method comprising:

   fusion-splicing a coreless fiber (402) to the optical fiber at a distal end of the optical fiber, the coreless fiber (402) forming a taper (405) at a distal end of the coreless fiber (402);
   heating a distal portion of the optical fiber together with a proximal portion of the coreless fiber (402) to form a diffusion region (201, 401) in which the one or more cores (401) laterally expand; and
   surrounding the distal portion of the optical fiber and the coreless fiber (402) with a light-absorbing metal tube (404) and adhering the light-absorbing tube (404) to the coreless fiber (402), wherein the light-absorbing tube (404) extends distally beyond the taper (405) and produces high specular and low diffuse reflection when light is incident on the light-absorbing metal tube (404) at a grazing angle of incidence,
   wherein lateral expansion of the one or more cores (401) cause light from the optical fiber to expand in the coreless fiber (402) and to interact with the light-absorbing metal tube (404) at a grazing angle of incidence greater than 45 degrees,
   wherein the distal portion of the optical fiber, the coreless fiber (402), and the light-absorbing metal tube (404) collectively form a termination structure that terminates the optical fiber, and
   wherein the termination structure has a length less than 5 mm, has a largest transverse dimension less than 325 um, and achieves a return loss of -70dB or less regardless of a presence of surfaces (105) proximate the termination structure..

9. The method of claim 8, further comprising:
   forming the taper (405) by pulling the coreless fiber (402) while the coreless fiber is heated.

10. The method of claim 8 or 9, further comprising:
    placing termination media (403) between the light-absorbing tube (404) and the taper (405).

**Patentansprüche**

1. Vorrichtung, die Folgendes umfasst:

   einen Lichtwellenleiter mit einem oder mehreren Kernen (101);
   eine kernlose Faser (402), die an einem distalen Ende des Lichtwellenleiters an den Lichtwellenleiter fusioniert ist, wobei die kernlose Faser (402) an einem distalen Ende der kernlosen Faser (402) eine Verjüngung (405) bildet; und
   eine lichtabsorbierende Metallröhre (404), die einen distalen Abschnitt des Lichtwellenleiters umgibt, an der kernlosen Faser (402) haftet und sie umgibt und sich distal über die Verjüngung (405) hinaus erstreckt, wobei die lichtabsorbierende Metallröhre (404) eine hohe spiegelnde und eine geringe diffuse Reflexion erzeugt, wenn Licht unter einem streifenden Einfallswinkel auf die lichtabsorbierende Röhre einfällt;
   wobei eine Diffusionsregion (201, 401) durch Erhitzen des distalen Abschnitts des Lichtwellenleiters zusammen mit einem proximalen Abschnitt der kernlosen Faser (402) gebildet wird,
   wobei sich die ein oder mehreren Kerne (101) lateral innerhalb der Diffusionsregion (201, 401) ausdehnen, um zu bewirken, dass sich Licht vom Lichtwellenleiter in der kernlosen Faser (402) ausdehnt und mit der lichtabsorbierenden Metallröhre (404) unter einem streifenden Einfallswinkel von mehr als 45 Grad in Wechselwirkung tritt,
   wobei der distale Abschnitt des Lichtwellenleiters, die kernlose Faser (402) und die lichtabsorbierende Metallröhre (404) gemeinsam eine Abschlussstruktur bilden, die den Lichtwellenleiter abschließt, und
   wobei die Abschlussstruktur eine Länge von weniger als 5 mm und eine größte Querabmessung von weniger als 325 $\mu$m aufweist und eine Rückflussdämpfung von -70 dB oder weniger unabhängig vom Vorhandensein von Oberflächen (105) in der Nähe der Abschlussstruktur erreicht.

2. Vorrichtung nach Anspruch 1, wobei der Lichtwellenleiter einen Lichtwellenleiter auf Siliziumdioxidbasis umfasst und wobei die kernlose Faser (402) eine undotierte Siliziumdioxidfaser umfasst.

**3.** Vorrichtung nach Anspruch 1, die ferner ein Abschlussmedium (403) zwischen der lichtabsorbierenden Metallröhre (404) und der Verjüngung (405) umfasst.

**4.** Vorrichtung nach Anspruch 3, wobei das Abschlussmedium (403) einen Brechungsindex nahe und über einem Brechungsindex der Verjüngung (405) aufweist.

**5.** Vorrichtung nach Anspruch 3 oder 4, wobei das Abschlussmedium (403) die kernlose Faser (402) an die lichtabsorbierende Metallröhre (404) heftet.

**6.** Vorrichtung nach einem der Ansprüche 3 bis 5, wobei das Abschlussmedium (403) nichtstreuend ist.

**7.** Vorrichtung nach einem der Ansprüche 3 bis 6, wobei das Abschlussmedium (403) lichtabsorbierend ist.

**8.** Verfahren zum Abschließen eines Lichtwellenleiters mit einem oder mehreren Kernen (101), wobei das Verfahren Folgendes umfasst:

Fusionsspleißen einer kernlosen Faser (402) an den Lichtwellenleiter an einem distalen Ende des Lichtwellenleiters, wobei die kernlose Faser (402) an einem distalen Ende der kernlosen Faser (402) eine Verjüngung (405) bildet;
Erhitzen eines distalen Abschnitts des Lichtwellenleiters zusammen mit einem proximalen Abschnitt der kernlosen Faser (402), um eine Diffusionsregion (201, 401) zu bilden, in der sich die ein oder mehreren Kerne (401) lateral ausdehnen; und
Umgeben des distalen Abschnitts des Lichtwellenleiters und der kernlosen Faser (402) mit einer lichtabsorbierenden Metallröhre (404) und Heften der lichtabsorbierenden Röhre (404) an die kernlose Faser (402), wobei sich die lichtabsorbierende Röhre (404) distal über die Verjüngung (405) hinaus erstreckt und eine hohe spiegelnde und eine geringe diffuse Reflexion erzeugt, wenn Licht unter einem streifenden Einfallswinkel auf die lichtabsorbierende Metallröhre (404) einfällt,
wobei die laterale Ausdehnung der ein oder mehreren Kerne (401) bewirkt, dass sich das Licht von dem Lichtwellenleiter in die kernlose Faser (402) ausdehnt und mit der lichtabsorbierenden Metallröhre (404) bei einem streifenden Einfallswinkel von mehr als 45 Grad in Wechselwirkung tritt,
wobei der distale Abschnitt des Lichtwellenleiters, die kernlose Faser (402) und die lichtabsorbierende Metallröhre (404) gemeinsam eine Abschlussstruktur bilden, die den Lichtwellenleiter abschließt, und
wobei die Abschlussstruktur eine Länge von weniger als 5 mm und eine größte Querabmessung von weniger als 325 $\mu$m aufweist und eine Rückflussdämpfung von -70 dB oder weniger unabhängig vom Vorhandensein von Oberflächen (105) in der Nähe der Abschlussstruktur erreicht.

**9.** Verfahren nach Anspruch 8, das ferner Folgendes umfasst:
Ausbilden der Verjüngung (405) durch Ziehen der kernlosen Faser (402) während des Erwärmens der kernlosen Faser.

**10.** Verfahren nach Anspruch 8 oder 9, das ferner Folgendes umfasst:
Platzieren eines Abschlussmediums (403) zwischen der lichtabsorbierenden Röhre (404) und der Verjüngung (405).

**Revendications**

**1.** Dispositif comprenant :

une fibre optique ayant une ou plusieurs âmes (101) ;
une fibre sans âme (402) fusionnée à la fibre optique au niveau d'une extrémité distale de la fibre optique, la fibre sans âme (402) formant un effilement (405) au niveau d'une extrémité distale de la fibre sans âme (402); et
un tube métallique à absorption de lumière (404) entourant une portion distale de la fibre optique, adhérant à et entourant la fibre sans âme (402), et s'étendant de manière distale au-delà de l'effilement (405), dans lequel le tube métallique à absorption de lumière (404) produit une réflexion spéculaire élevée et une faible réflexion diffuse lorsque la lumière est incidente sur le tube à absorption de lumière à un angle d'incidence rasant ;
dans lequel une région de diffusion (201, 401) est formée suite au chauffage de la portion distale de la fibre optique en conjonction avec une portion proximale de la fibre sans âme (402),
dans lequel les une ou plusieurs âmes (101) s'étendent latéralement au sein de la région de diffusion (201, 401) pour amener la lumière provenant de la fibre optique à s'étendre dans la fibre sans âme (402) et à interagir avec le tube métallique à absorption de lumière (404) à un angle d'incidence rasant plus grand que 45 degrés,

dans lequel la portion distale de la fibre optique, la fibre sans âme (402), et le tube métallique à absorption de lumière (404) forment collectivement une structure de terminaison qui termine la fibre optique, et

dans lequel la structure de terminaison a une longueur de moins de 5 mm, a une dimension transversale la plus grande de moins de 325 um, et atteint un affaiblissement de réflexion de -70 dB ou moins indépendamment d'une présence de surfaces (105) proches de la structure de terminaison.

2. Dispositif de la revendication 1, dans lequel la fibre optique comprend une fibre optique à base de silice, et dans lequel la fibre sans âme (402) comprend une fibre de silice non dopée.

3. Dispositif de la revendication 1, comprenant en outre un milieu de terminaison (403) entre le tube métallique à absorption de lumière (404) et l'effilement (405).

4. Dispositif de la revendication 3, dans lequel le milieu de terminaison (403) a un indice de réfraction proche de et supérieur à un indice de réfraction de l'effilement (405).

5. Dispositif de la revendication 3 ou 4, dans lequel le milieu de terminaison (403) fait adhérer la fibre sans âme (402) au tube métallique à absorption de lumière (404).

6. Dispositif de n'importe lesquelles des revendications 3 à 5, dans lequel le milieu de terminaison (403) est non dispersant.

7. Dispositif de n'importe lesquelles des revendications 3 à 6, dans lequel le milieu de terminaison (403) absorbe la lumière.

8. Procédé de terminaison d'une fibre optique ayant une ou plusieurs âmes (101), le procédé comprenant :

le fait d'effectuer un épissurage par fusion d'une fibre sans âme (402) sur la fibre optique au niveau d'une extrémité distale de la fibre optique, la fibre sans âme (402) formant un effilement (405) au niveau d'une extrémité distale de la fibre sans âme (402) ;

le fait de chauffer une portion distale de la fibre optique en conjonction avec une portion proximale de la fibre sans âme (402) afin de former une région de diffusion (201, 401) dans laquelle les une ou plusieurs âmes (401) s'étendent latéralement ; et

le fait d'entourer la portion distale de la fibre optique et la fibre sans âme (402) avec un tube métallique à absorption de lumière (404) et de faire adhérer le tube à absorption de lumière (404) à la fibre sans âme (402), dans lequel le tube à absorption de lumière (404) s'étend de manière distale au-delà de l'effilement (405) et produit une réflexion spéculaire élevée et une faible réflexion diffuse lorsque la lumière est incidente sur le tube métallique à absorption de lumière (404) à un angle d'incidence rasant,

dans lequel l'expansion latérale des une ou plusieurs âmes (401) amène la lumière provenant de la fibre optique à s'étendre dans la fibre sans âme (402) et à interagir avec le tube métallique à absorption de lumière (404) à un angle d'incidence rasant plus grand que 45 degrés,

dans lequel la portion distale de la fibre optique, la fibre sans âme (402), et le tube métallique à absorption de lumière (404) forment collectivement une structure de terminaison qui termine la fibre optique, et

dans lequel la structure de terminaison a une longueur de moins de 5 mm, a une dimension transversale la plus grande de moins de 325 um, et atteint un affaiblissement de réflexion de -70 dB ou moins indépendamment d'une présence de surfaces (105) proches de la structure de terminaison.

9. Procédé de la revendication 8, comprenant en outre :
le fait de former l'effilement (405) en tirant la fibre sans âme (402) pendant que la fibre sans âme est chauffée.

10. Procédé de la revendication 8 ou 9, comprenant en outre :
le fait de placer un milieu de terminaison (403) entre le tube à absorption de lumière (404) et l'effilement (405) .

Figure 1

Figure 2

Figure 3

103

Optical Fiber

102

101

107

Figure 4

Termination
Structure

104

103

Optical Fiber

101

102

201

203  202

105

Figure 5

Termination
Structure

104

103

Optical Fiber

101

102

201

203

202

105

Figure 6

Figure 7

Figure 8

## Figure 8A

Expanded View of Metal Tube

S1: Prepare optical fiber end for termination

⬇

S2: Prepare proper size termination material to be attached

⬇

S3: Align and fuse optical fiber to termination material

⬇

S4: (Optional) Perform additional heat process to achieve required diffusion region with impedance match if not already achieved

⬇

S5: Break off or separate termination material, leaving appropriate volume

⬇

S6: (Optional) Attach absorbing tube with specular reflection to outside of termination material using index matched epoxy for absorption and/or protection

⬇

S7: (Optional:) Add absorbing material to outside of structure

## Figure 9

Figure 10

Figure 11

Figure 12

Step 2

Step 5

Step 6
before
epoxy

Step 6
after
epoxy

Figure 13

Figure 14

**EP 4 040 202 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61379116 A
- US 87490110, Froggatt
- US 5263103 A
- US 6496643 B
- US 2006188212 A1
- WO 0138914 A1
- JP HOS334649 A
- US 5809198 A